# EUROPEAN PATENT APPLICATION

(11) **EP 4 421 018 A1**
(43) Date of publication of application: **28.08.2024**
(21) Application number: 24158623.9
(22) Date of filing: 20.02.2024
(51) Int. Cl.: B66F 9/06, B66F 9/065, B66F 9/075, B66F 9/12, B66F 9/10, B62B 3/06

(54) **PALLET TRUCK**

(30) Priority: 23.02.2023 NL 2034206
(71) Applicant: Nipper B.V., 5521DW Eersel (NL)
(72) Inventor: KAVELAARS, Bart Johannes Gerardus, 5521DW EERSEL (NL)
(74) Representative: Algemeen Octrooi- en Merkenbureau B.V.

(57) **Abstract**

Pallet truck (1) for transporting a load carrier, comprising
- a base unit (2) comprising two elongate support arms (4) which extend parallel to and next to each other and each have an elongate first support surface,
- a lifting unit (3) which is provided with
- a lifting base body,
- two elongate lifting arms (21) which extend parallel to the length directions of the support arms and each have an elongate second support surface,
- a vertical displacement device (29) for displacing the two lifting arms up and down in a vertical direction with respect to the lifting base body between a receiving position and a transferring position, wherein, in the transferring position, the second support surfaces are higher than the first support surfaces and higher than the level of the second support surfaces in the receiving position,

the pallet truck further comprising
- a horizontal displacement device (41) for displacing the lifting unit back and forth in a horizontal direction with respect to the base unit between a compact position and an extended position.

The vertical displacement device has, for each of the two lifting arms, at least one lifting mechanism, which lifting mechanisms are each provided below the second support surface of an associated lifting arm in order to displace or at least contribute to the displacement of the two lifting arms between the receiving position and the transferring position.

## Description

The present invention relates to a pallet truck for transporting a load carrier such as a pallet. Pallets exist in various embodiments and are, for example, standardized according to International Standard ISO 6780 second edition 2003-12-01 "Flat pallets for intercontinental materials handling - Principal dimensions and tolerances". Pallets always have, on their upper side, a support surface for supporting a load thereon and, on their lower side, a bottom surface by means of which the pallet can rest on an underlying surface such as a floor. Pallets are generally designed with insertion openings at least on two upright sides, such that it is possible, from the sides in question, to insert fork arms of a pallet truck via the insertion openings below the support surface of the pallet and to then lift and transport the pallet. In order to prevent tipping over of the pallet truck, it is known for a lifting mechanism, in each case having at least one fork wheel, to be provided on the pallet truck for each of the fork arms, at the free ends thereof. In use, the fork wheels rest or roll on an underlying surface on which a pallet to be transported also rests. Operation of the lifting mechanism makes it possible to move the fork wheels and fork arms away from each other in the vertical direction, as a result of which the upper sides of the fork arms come into contact with the pallet and lift it such that the pallet comes off of the underlying surface, the fork wheels partly bear the weight of the pallet (with any load) and the pallet can be displaced with the aid of the pallet truck.

Some types of pallets have a bottom surface which is closed along the entire periphery thereof. Such a closed periphery hinders fork arms which are provided with fork wheels at their free ends from being inserted into side openings of the pallet in question because the fork wheels cannot pass through the closed periphery of the bottom surface. For such pallets, it is therefore known to use pallet trucks having "floating" fork arms, meaning that the fork arms in question are not provided with fork wheels at their free ends. Use of such pallet trucks may also be of benefit for lifting and transporting pallets which do not have a bottom surface that is closed along the entire periphery, but for which it is preferable or merely possible for a pallet truck to approach the pallet in question from a side of the pallet where the bottom surface has a closed periphery. The pallet trucks in question having floating fork arms are often provided with a counterweight to offer resistance against tilting of the pallet truck due to the weight of a pallet with a load thereon. Partly due to such a counterweight, such pallet trucks are relatively heavy and cumbersome and less manoeuvrable. Known pallet trucks which are provided with a counterweight have a total weight which is considerably higher than the lifting capacity of the pallet trucks in question.

American patent US 2992751 describes a pallet truck according to the preamble of Claim 1. The pallet truck in question is designed with two floating lifting arms.

The invention aims to offer a solution or at least an improvement for the aforementioned drawbacks and, to this end, provides a pallet truck according to Claim 1. When using the pallet truck, the lifting arms are in the receiving position at a level at which they can be inserted in the horizontal direction below the support surface of a pallet, whereas, in the transferring position, the lower side of a pallet received by the lifting arms is higher than the first support surfaces. Since the pallet truck according to the invention is designed with a lifting mechanism for each of the two lifting arms, support under the lifting arms can be provided for a load carrier which has a load and is to be lifted using the lifting arms. To this end, the lifting mechanisms can provide the full force required to vertically displace the lifting arms together with a load carrier and any load on said arms, or provide a contribution in the event that the vertical displacement device has other facilities for being able to vertically displace the lifting arms. By virtue of the lifting mechanisms below the second support surfaces, the risk of tipping over can be significantly limited and a pallet truck according to the invention can be of relatively lightweight, manoeuvrable and compact design. The weight of the pallet truck can, for example, be lower than the lifting capacity of the pallet truck or lower even than half of it.

In one embodiment, each lifting mechanism has a supporting body and each lifting mechanism is configured to be able to displace the supporting body and the associated lifting arm in the vertical direction with respect to each other between a first extreme position and a second extreme position, wherein the distance between the supporting body and the second support surface of the associated lifting arm in the first extreme position is smaller than in the second extreme position, and wherein the difference between these distances is greater than the distance between the first support surfaces and the underlying surface, preferably at least 1 cm greater. It is thus possible to achieve a situation in which the lifting arms are capable of lifting a load carrier from a floor up to a level at which the lower side of the load carrier is higher than the first support surfaces.

The risk of tipping over of the pallet truck can notably be limited by virtue of at least one lifting mechanism belonging to each arm being provided close to a free end of the associated lifting arm. This means that part of the length of the lifting arm which adjoins the free end, and which part has a length of 25% of the total length of the lifting arm. The relevant position of the lifting mechanism is the position of the lifting mechanism in which the lifting mechanism rests on the underlying surface in the transferring position.

In a further embodiment, each supporting body is a wheel. This also offers a suitable possibility for transporting a pallet with the pallet truck in the second extreme position or at least in a position in which the supporting body is supported on the underlying surface.

In one embodiment, each lifting mechanism comprises two linkage arms which are hingeably connected to each other, preferably at the lower end of at least one linkage arm, and wherein the associated supporting body is provided at the lower end of at least one linkage arm, and wherein the lifting mechanism is configured to move the upper ends of the linkage arms away from and towards each other. A lifting mechanism designed in this way can have a limited installation height. The supporting body may actually also be formed by at least one lower end of a linkage arm. If the linkage arms are provided in a mirror-symmetrical manner, the supporting body can be displaced according to a strictly vertical upward and downward displacement.

A reliable embodiment can be obtained if each lifting mechanism comprises a spindle having two opposite external threaded parts which are in line with each other and are rigidly connected to each other and the two linkage arms each have a screw body having an internal screw thread, wherein the directions of the two screw threads are opposite to each other, and wherein one of the two screw bodies engages with one of the two threaded parts and the other of the two screw bodies engages with the other of the two threaded parts. Driving of the spindle will lead to folding in or folding out of the linkage arms and thus to vertical displacement of a respective supporting body and a respective lifting arm with respect to each other.

In a constructionally favourable embodiment, the horizontal displacement device comprises a horizontal guide device for guiding the back-and-forth displacement of the lifting unit with respect to the base unit between the compact position and the extended position.

The favourable nature of the construction is relevant, in particular, if the horizontal guide device comprises, for each of the support arms, at least one guide which extends in the length direction of the support arms and preferably each form part of a support arm.

From the viewpoint of constructive simplicity, but also from the viewpoint of increased stability during use of the pallet truck, it may be preferable for the two lifting arms to extend between the two support arms.

In order to be suitable for customary pallets, it may be preferable for mutually averted sides of the lifting arms to be situated at a distance of between 42 cm and 58 cm, preferably of between 47 cm and 53 cm, from each other, for mutually facing sides of the lifting arms to be situated at a distance of between 10 cm and 40 cm, preferably of between 30 cm and 35 cm, from each other, for the mutually averted sides of the outer one of the support arms or of the lifting arms to be situated at a distance of between 70 cm and 110 cm, preferably of between 75 and 85 cm or of between 95 cm and 105 cm, from each other, for the first support surface of each support arm and/or the second support surface of each lifting arm to have a length of between 80 cm and 140 cm, preferably of between 110 cm and 130 cm, and/or for the lengths of the first support surfaces and the second support surfaces to differ by at most 5 cm from each other, and/or for the height of each lifting arm to be smaller than the height of each support arm, preferably wherein the height of each lifting arm is smaller than 8 cm.

The manoeuvrability of the pallet truck may benefit if, in the compact position, free ends of the lifting arms and of the support arms protrude by at most 5 cm with respect to each other.

According to a further embodiment, the pallet truck is of the self-propelled type. To this end, the pallet truck will comprise a control system and sensor system, wherein the sensor system comprises, for example, cameras and/or contact sensors and the control system is partly active for controlling the pallet truck on the basis of signals originating from the sensor system. The pallet truck is suitable for autonomously receiving a pallet at position A, transporting it to position B and depositing the pallet there. In particular if the pallet truck is of self-propelled design, further preference is given to the running wheels being of the omnidirectional type and/or to the pallet truck being provided with drive motors for at least some of the number of running wheels, preferably for all the running wheels. Automated Guided Vehicles (AGV) and Autonomous Mobile Robots (AMR) are examples of self-propelled vehicles.

In one embodiment which may be particularly suitable for use with relatively low load carriers, in the receiving position the second support surfaces are lower than the first support surfaces.

In a constructionally favourable embodiment, the lifting unit may comprise a lifting body via which the two lifting arms are connected to each other and which is connected to the lifting base body so as to be displaceable, preferably slidable, up and down.

The use possibilities of the pallet truck may be increased if the vertical displacement device is configured to displace the two lifting arms up and down in the vertical direction with respect to the lifting base body between the receiving position and a lifting position, wherein the second support surfaces are higher, preferably at least 20 cm higher, in the lifting position than in the transferring position. Thus, with the aid of the lifting arms, it is possible for a load carrier to be placed not only on the support arms but also at a higher level, for example of a table or roller conveyor which are often situated at least 45 cm above an underlying surface.

In a further embodiment, the vertical displacement device comprises a further lifting mechanism which has a vertical stroke that is greater than the respective vertical strokes of the at least two lifting mechanisms which belong to the two lifting arms, and which further lifting mechanism is active between the lifting body and the lifting base body. Here, the further lifting mechanism may of course also be of benefit when displacing the two lifting arms between the receiving position and the transferring position.

According to a further aspect, the invention also relates to a method for using a pallet truck according to the invention as described above, whether or not in optional embodiments thereof. The method comprises the steps A to F as described in Claim 20. When using the method, the lifting arms move in floating fashion below the load surface of a load carrier, such as a pallet, whilst the pallet truck or at least the base unit thereof is preferably at a standstill, after which the load carrier is lifted by the lifting arms due to, or at least partly due to, the activity of the two lifting mechanisms. The lower side of the load carrier thus comes to lie at a higher level than the two first support surfaces. As a result of the relative horizontal displacement of the base unit and the lifting unit with respect to each other, the two first support surfaces come to lie directly below the load carrier, after which the lifting arms lower again such that the load of the load carrier is at least partially, preferably completely, transferred from the two second support surfaces of the lifting arms to the two first support surfaces of the two support arms, after which the load carrier can be transported to another position with the aid of the pallet truck.

It may be advantageous, at least from the viewpoint of stability, if, during step D, the lifting unit, and thus also the load carrier resting on the lifting arms of the lifting unit, is at a standstill at least in the horizontal direction and the base unit is displaced towards the lifting unit.

The advantages of the invention may be relevant, in particular, if the load carrier has, on the side facing the pallet truck during step A, a bottom part which rests on the underlying surface and the two lifting bodies move above the bottom part during step B.

The invention will be explained below on the basis of the following figures which show a possible embodiment of a pallet truck according to the invention.
Figure 1 shows an isometric rear view of a pallet truck in a compact position;
Figure 2 shows the pallet truck according to Figure 1 in an extended position and with the lifting arms thereof, just as in Figure 1, in a receiving position;
Figure 3 shows an isometric front view of the pallet truck in the positions according to Figure 2;
Figure 4 shows detail IV in Figure 3;
Figure 5 shows a bottom view of the pallet truck in the positions according to Figures 6a and 6b;
Figures 6a and 6b respectively show an isometric front view and a side view of the pallet truck according to the preceding figures in an extended position and in a transferring position;
Figures 7a and 7b respectively show detail VIIa in Figure 6b and detail Vllb in Figure 5;
Figures 8a and 8b show details according to Figures 7a and 7b, but with the pallet truck in the receiving position according to Figure 3;
Figure 9 shows cross section IX-IX in Figure 6b;
Figures 10a and 10b respectively show an isometric top view and an isometric bottom view of a pallet;
Figures 11a and 11b show an isometric rear view of the pallet truck in the compact position and in the transferring position, respectively without and with a loaded pallet thereon;
Figures 12 and 13 show an isometric rear view of the pallet truck respectively in the compact position and the transferring position and in a lifting position.

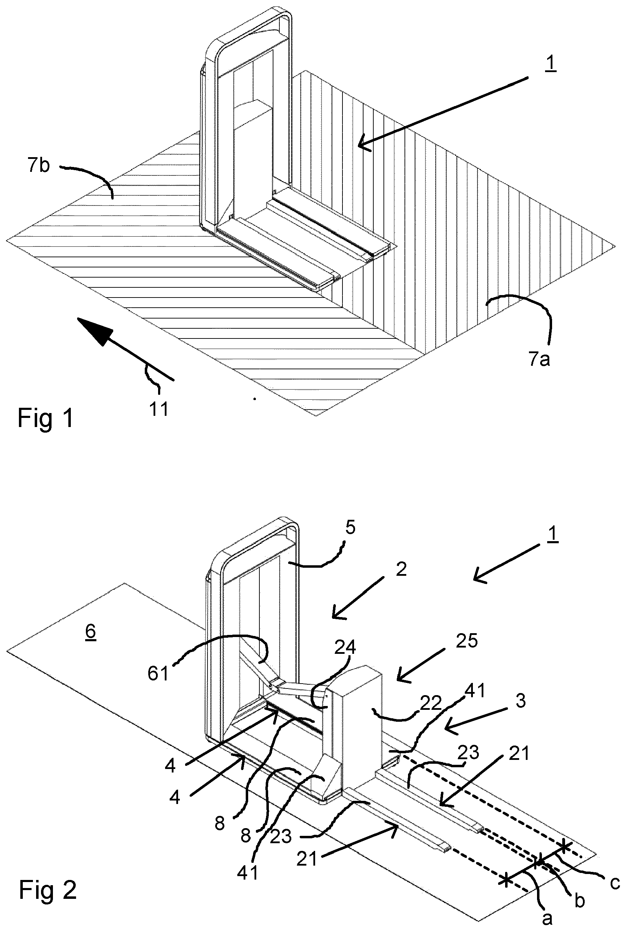

Figures 1 and 2 show a self-propelled pallet truck 1 according to the invention respectively in a retracted, compact position and in a pulled-out, extended position. In this embodiment, the pallet truck 1 has a lifting capacity of 1200 kg and a dead weight of about 500 kg.

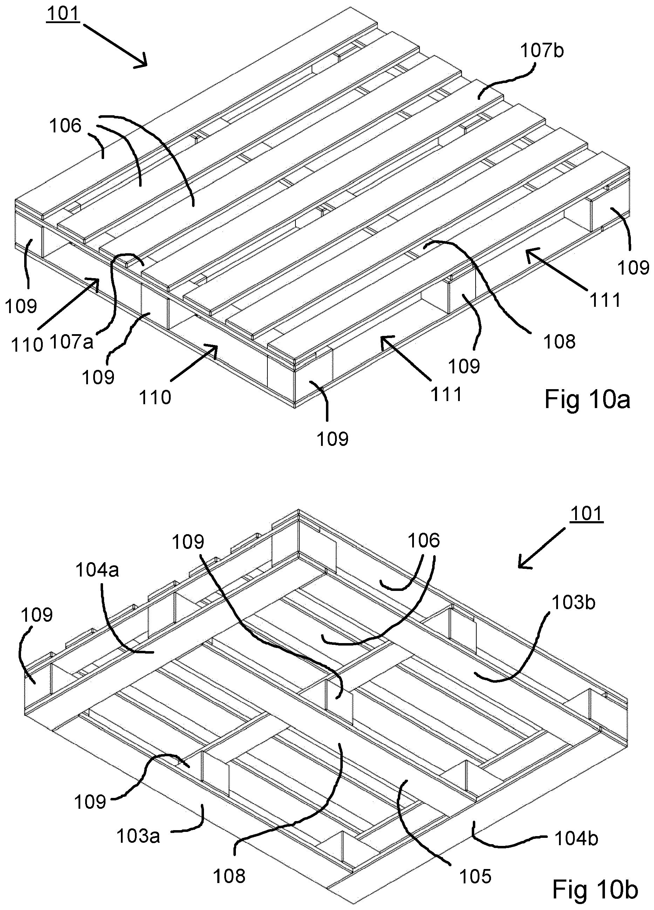

The pallet truck 1 comprises a base unit 2 and a lifting unit 3. The pallet truck 1 is configured to transport a load carrier such as a pallet 101, as illustrated in Figures 10a and 10b. During such transport, the pallet truck 1 will move, at least for the majority of the transport, in a transport direction 11. Relative terms such as front and rear and previous and next are used in relation to this transport direction 11.

The base unit 2 is provided with two support arms 4 which extend horizontally and parallel to each other and are connected to each other, at their front ends, via an upright main body 5 of the base unit 2. The flat elongate upper sides of the support arms 4 form support surfaces 8 for supporting a load carrier.

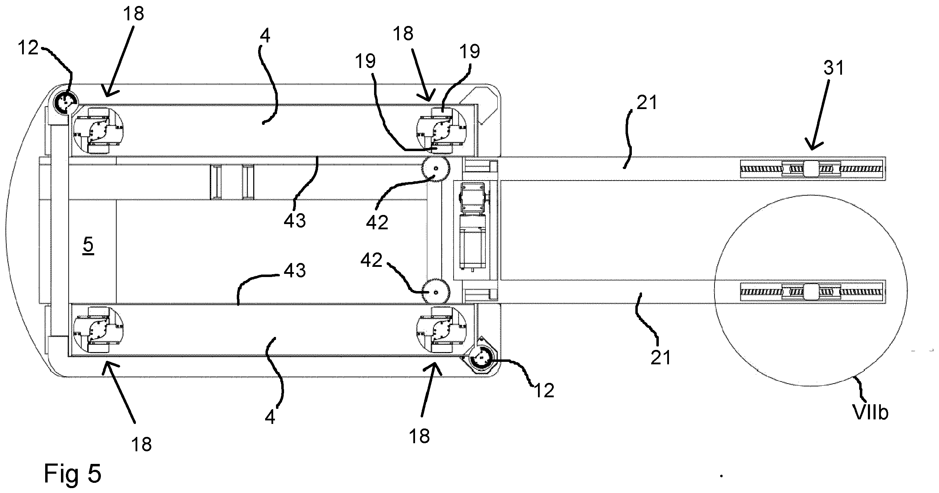

The base unit 2 is also provided, on the lower side thereof, with four pairs of running wheels 18 (Figure 5). Each of the pairs of running wheels 18 is provided with two running wheels 19 which are individually rotatably drivable about horizontal rotational axes, which are in line with each other, with the aid of electric motors provided per running wheel 19. Each pair of running wheels 18 is freely pivotable about a vertical pivot axis which intersects the rotational axes between the two running wheels 19 belonging to a pair of running wheels 18. By driving the two running wheels 19 belonging to a pair of running wheels 18 at different rotational speeds, the respective pair of running wheels 18 will pivot about the associated vertical pivot axis and can thus steer the pallet truck 1 to the left or right or displace it in crab steering fashion, in which sideways displacement, such as perpendicular to the transport direction 11, is possible. Two pairs of running wheels 18 are located at the free ends of the support arms 4. The other two pairs of running wheels 18 are provided at the opposite ends of the support arms 4 below the main body 5. The base unit 2 and also the pallet truck 1, as a whole, rests on the floor 6 by means of the running wheels 19.

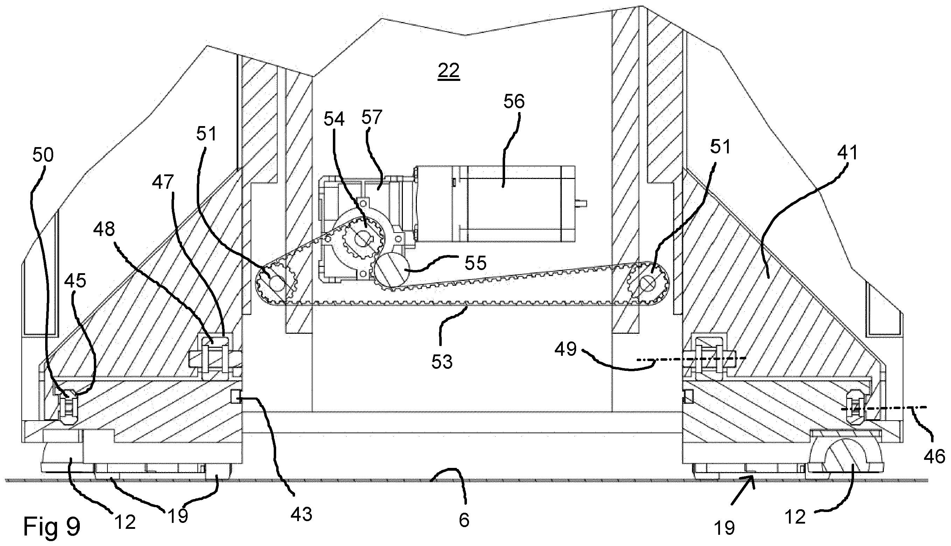

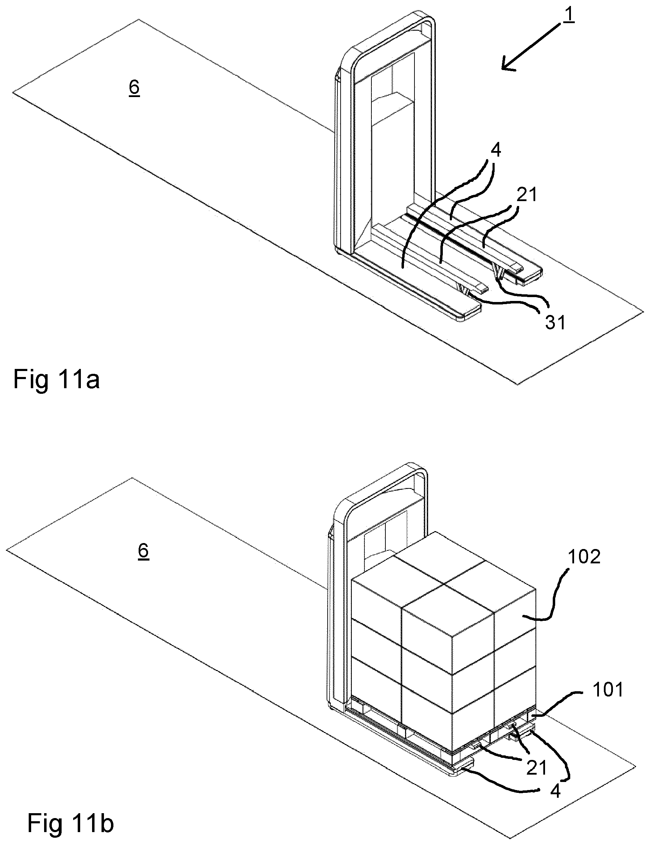

The main body 5 forms a housing for batteries which, inter alia, supply the electric motors for driving the running wheels 19 and also other electrically powered components of the pallet truck 1, which will be described below. The main body 5 also forms a housing for the electronic control system of the pallet truck 1. This control system is configured to receive orders from a central control system wirelessly during operation. The orders relate to the transport of a pallet, as shown by way of example in Figures 11a and 11b, with or without a load thereon, from the one location to another location, such as typically within a commercial space. The control system is configured to be able to autonomously control the pallet truck 1. To this end, the pallet truck is also provided with two sensors, in the form of laser scanners 12 (Figures 5 and 9), which are respectively provided, as seen in top view, at two opposite corners and on the lower side of the base unit 2. The laser scanners 12 each cover a horizontal L-shaped area 7a, 7b (Figure 1) above the floor 6 in the immediate vicinity of the pallet truck 1. The laser scanners 12 are capable of detecting obstacles within these areas 7a, 7b and are also configured to communicate signals relating to the detections by the laser scanners 12 to the control system such that the control system is capable, for example, of moving the pallet truck 1 around obstacles or stopping it temporarily to prevent a collision with an obstacle.

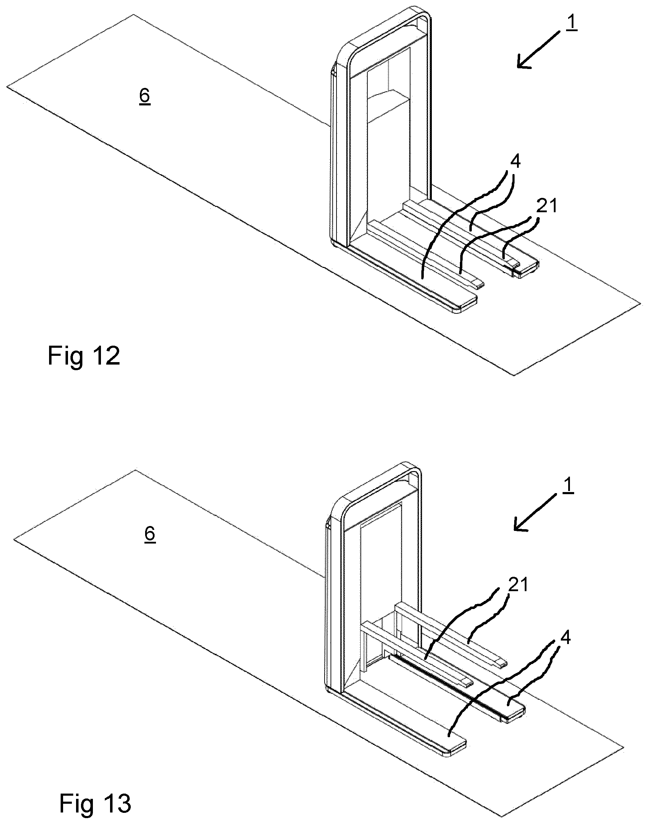

The lifting unit 3 is provided with two lifting arms 21 which extend horizontally and parallel to each other and are connected to each other, at their front ends, via an upright lifting body 22 of the lifting unit 3. The flat elongate upper sides of the lifting arms 21 form support surfaces 23 for supporting a load carrier such as a pallet. The lifting body 22, together with a lifting base body 24, forms part of a vertical lifting guide system 25. The lifting base body 24 also forms a housing. The lifting guide system 25 further comprises a hydraulic cylinder 29 which is configured to be active between the lifting body 22 and the lifting base body 24, more specifically to be able to displace the lifting body 22 up and down with respect to the lifting base body 24 between a low receiving position as illustrated, inter alia, in Figures 1 and 2 and a higher lifting position as illustrated in Figure 13. The support surfaces 23 of the lifting arms 21 may be at least 45 cm higher in the lifting position than in the receiving position. The stroke length of the cylinder is therefore at least 45 cm. During operation, the cylinder 29 is hydraulically supplied by an electrically powered hydraulic motor (not shown in any more detail) provided in the housing of the lifting guide system 25. For the power supply of the hydraulic motor, supply cables run between the batteries in the main body 5 and the hydraulic motor via the articulated cable guide 61 which is hingeably connected to the main body 5 at one end and to the lifting base body 24 at the opposite ends.

The distance a between mutually facing sides of the lifting arms 21 is 34 cm, whilst the widths b and c of each lifting arm 21 and each support arm 4 is 8 cm and 25 cm, respectively. The length of each of the lifting arms 21 and the support arms 4 is 100 cm. The height of each of the lifting arms 21 is 6 cm, whilst the height of each of the support arms 4 is about 10 cm and the support arms 4 have a floor clearance of about 1 cm. The first support surfaces 8 of each of the support arms 4 are thus situated about 11 cm above the floor 6. The use of the pairs of wheels 18 limits the possibilities for designing the support arms 4 to be narrower and less tall, which would be better possible in a variant with wheels which require less height and width.

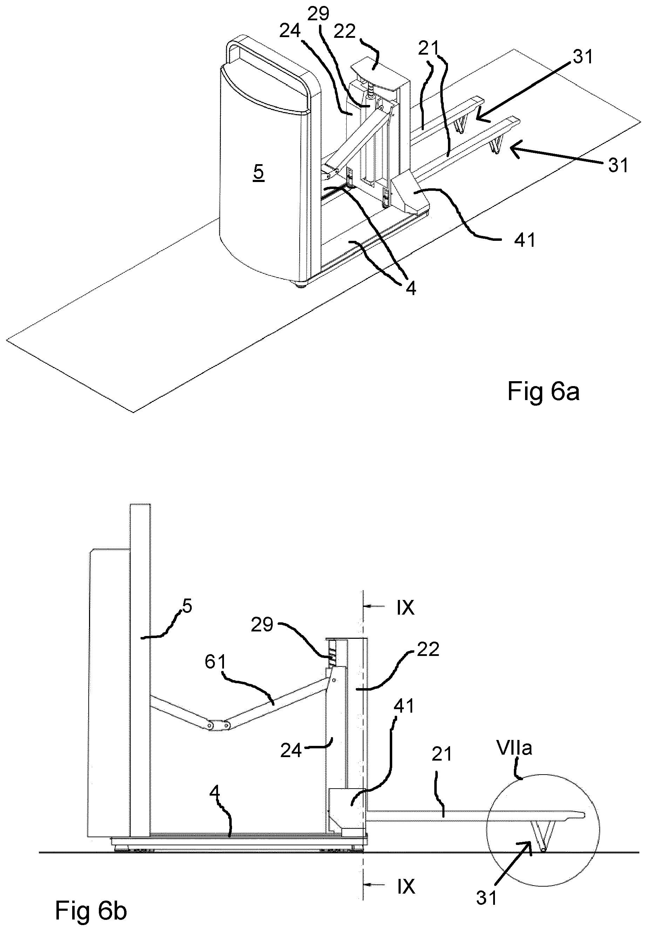

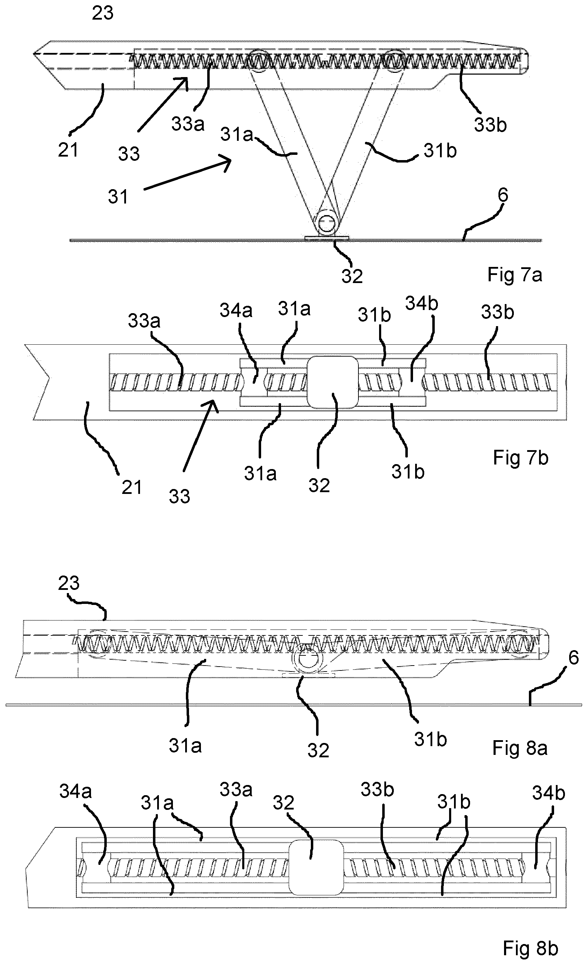

Below each of the lifting arms 21, at the free, rear ends thereof, the lifting unit 3 is also provided with a lifting mechanism 31, the operation of which will also be explained below, inter alia, on the basis of Figures 7a to 8b. Each lifting mechanism 31 comprises, on the lower side thereof, a supporting foot 32 which is displaceable with the aid of the lifting mechanism 31 between a first extreme position (Figures 8a, 8b) and a second extreme position (close to the position according to Figures 7a, 7b). In the first extreme position, as applicable by way of example in Figures 1, 2 and 3, the supporting foot 32 is free from the floor and the lower side of the supporting foot 32 is within the height of the associated lifting arm 21, even if the lifting arms 21 are in the aforementioned receiving position. In the second extreme position, the supporting foot 32 rests on the floor 6 if the lifting arms 21 are in a transferring position, as illustrated by way of example in Figures 6a, 6b, 7a and 7b. The lifting mechanisms 31 then partly support the lifting arms 21 in the transferring position. In the transferring position, which is between the receiving position and the lifting position, support surfaces 23 of the lifting arms 21 are higher than the support surfaces 8 of the support arms, as is clearly visible in particular in Figure 6b. The stroke length of each of the lifting mechanisms 31 is about 20 cm.

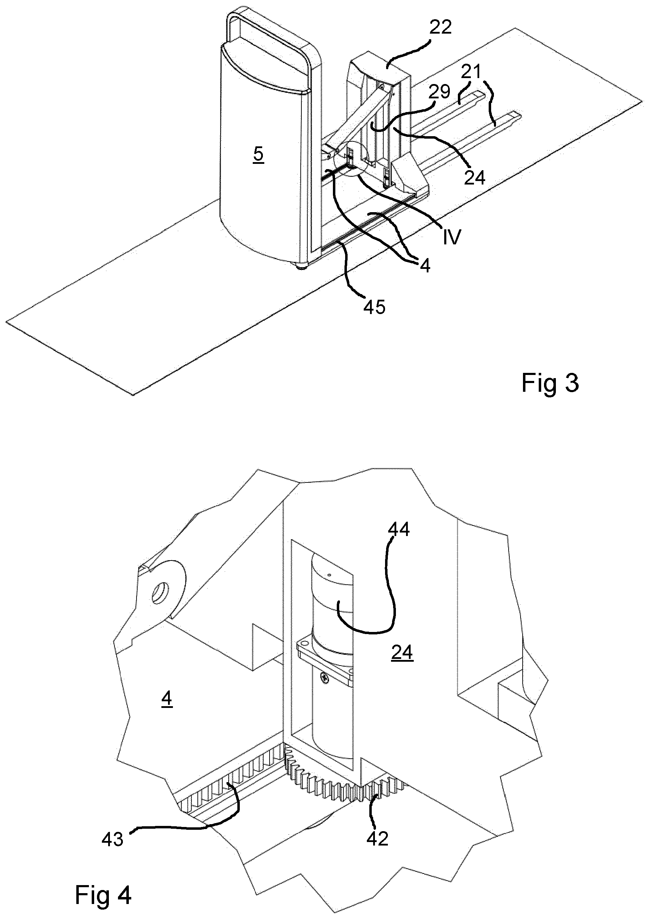

The lifting unit 3 is displaceable back and forth in the horizontal direction with respect to the base unit 2 between a retracted, compact position, as illustrated by way of example in Figure 1, and a pulled-out, extended position, as illustrated by way of example in Figures 2 and 3. For this displacement, the lifting unit 3 is provided with two side members 41 which are provided on opposite sides of the lifting guide system 25 and are each rigidly connected to the lifting base body 24. The side members 41 extend above the support arms 4.

As shown in Figure 4, the lifting unit 3 further comprises, for each support arm 4, a drive device with a rack transmission comprising a gear 42 and a rack 43 with which the associated gear 42 engages. The gears 42 are connected to the lifting base body 24 so as to be rotatable about an associated vertical rotational axis and can each be driven with the aid of the associated electric motor 44. Energization of the electric motors 44 will thus ensure that the lifting base body 24, and thus the entire lifting unit 3, due to the rack transmission, will be displaced in the length direction of the support arms 4 within the lengths thereof.

For this horizontal displacement, each of the support arms 4 is provided, as shown in Figure 9, on their respective outer longitudinal sides, over the entire length of the support arms 4, with a guide groove 45, in which guide rollers 50 provided in line with each other can roll. The guide rollers 50 are each connected to a part of the respective side member 41, said part extending downwards on the outer side of the associated support arm 4, so as to be rotatable about a horizontal rotational axis 46. Furthermore, the lower side of each side member 41 is provided with two cutouts 47 which are situated one behind the other and in which running wheels 48 extend. The running wheels 48 are connected to the respective side member 41 so as to be rotatable about rotational axes 49. The running wheels 48 are supported on the support surfaces 8 of the support arms 4.

The cylinder 29 enables the pallet truck 1 to displace the lifting body 22 up and down with the lifting arms between the aforementioned low receiving position and the aforementioned higher lifting position. This displacement, at least a lower part thereof, specifically the up-and-down displacement between the low receiving position and the higher transferring position, is also supported during operation with the aid of the aforementioned lifting mechanisms 31. Figures 5 to 7b, inter alia, relate to such a transferring position. In the transferring position, the lifting mechanisms 31 support the lifting arms 21 at their rear, free ends.

The lifting unit 3 also comprises a drive system for driving the lifting mechanisms 31. The drive system in question comprises, as shown in Figure 9, two gears 51 which are rotatable about horizontal rotational axes which extend parallel to the length direction of the support arms 4. For driving the gears 51, a toothed belt 53 is wound around the gears 51. The toothed belt 53 is also wound around a gear 54 and a guide roller 55. The gear 54 can be driven with the aid of an electric motor 56 and by means of a right-angled transmission 57, such that, during operation, the gears 51 are also driven in rotation. The gears 51 and the combination of electric motor 56, transmission 57, guide roller 55 and gear 54 are connected, whether or not rotatably about their axis, to the lifting body 22 and will thus be jointly displaced up and down with respect to the lifting base body 24 when the cylinder 29 is energized. For such vertical displacement, the lifting unit 3 is provided with a vertical guide device (not shown in any more detail) which is active between the lifting body 22 and the lifting base body 24.

As shown in Figures 7a to 8b, each lifting mechanism 31 comprises two pairs of linkage arms 31a, 31b which are hingeably connected to each other, at their lower ends, at the location of a supporting foot 32. The upper ends of the linkage arms 31a, 31b are connected to each other via screw bodies 34a, 34b which are each provided with an internal screw thread, wherein the directions of the screw threads in question are opposite to each other. Each lifting mechanism 31 further comprises a spindle 33 which is designed with two opposite external threaded parts 33a, 33b which are in line with each other and are rigidly connected to each other. The screw body 34a engages with the threaded part 33a and the screw body 34b engages with the threaded part 33b. The spindle 33 extends within the height of an associated lifting arm 21 in the length direction and close to the free (rear) end thereof, is connected to the lifting arm 21 in question so as to be rotatable about the axis thereof and is also rigidly connected to one of the two gears 51. Energization of the electric motor 56 will have the result that the spindles 33 will rotate about their axes and the screw bodies 34a, 34b of each of the lifting mechanisms 31, and thus the upper ends of the linkage arms 31a, 31b, move away from or towards each other such that the lifting mechanisms 31 can be displaced between the first extreme position (Figures 8a and 8b) and a second extreme position (close to the position according to Figures 7a and 7b).

The pallet 101 as shown in Figures 10a, 10b is made of wood and has a rectangular bottom surface which is largely open and is partly formed by five bottom slats 103a, 103b, 104a, 104b and 105. The bottom slats 103a to 104b are situated along the periphery of the bottom surface and provide the bottom surface with a closed character. The pallet 1 further comprises a rectangular support surface which is partly formed by the upper sides of, in this example, seven parallel support slats 106 which are secured, for example nailed, to supporting slats 107a, 107b, 108 with a certain gap between adjacent support slats 106. The supporting slats 107a, 107b, 108 and the five bottom slats 103a, 103b, 104a, 104b and 105 are connected to one another via blocks 109. Between adjacent blocks, there are two openings 110 or two openings 111 on each peripheral side of the pallet 101. In top view, the bottom surface and the support surface of the pallet 101, which extend directly one above the other, have a length of 120 cm and a width of 100 cm. The height of the pallet 101 is about 15 cm and the heights of the openings 110, 111 are about 10 cm.

The pallet truck 1 can be used autonomously, as follows, for displacing a pallet, such as pallet 101 which is potentially loaded with cargo 102 (Figure 11b), in accordance with an order from a central control system.

The pallet truck 1 moves in the compact position, in which the lifting arms 21 are in the low receiving position and the lifting mechanisms 31 are in the first extreme position (Figures 1, 8a, 8b), over the floor 6 to a position opposite the pallet 101 and in such a way that the two free ends of the lifting arms 21 extend directly opposite two openings 110 of the pallet 101 and the free ends of the support arms 4 are at a short distance, for example less than 5 cm, from the pallet 101. With the base unit 2 at a standstill, the electric motors 44 are then energized so as to slide the lifting arms 21 out from the compact position to the extended position (Figures 2 and 3). In this case, the lifting arms 21 are displaced through the openings 110, the lifting arms 21 ending up extending, over almost their entire length, directly below the support surface of the pallet 101. Both the motor 56 and the cylinder 29 are then energized so as to displace the lifting arms 21 from the receiving position to the higher transferring position (Figures 6a to 7b). In this case, the support surfaces 23 of the lifting arms 21 come into contact with the lower sides of the supporting slats 107a, 107b, 108 and the pallet 101 is lifted, the supporting feet 32 within openings of the open bottom surface of the pallet 101 coming to rest on the floor 6. The lifting mechanisms 31 thus prevent the pallet truck 1 from tipping over due to the weight of the pallet 101 with its load 102.

In the transferring position, the bottom surface of the pallet 101 is higher than support surfaces 8 of the support arms 4. The electric motors belonging to the running wheels 19 and the electric motors 44 are then energized in such a way that the base unit 2 moves below the pallet 101, the pallet truck 1 adopts the compact position again and the support arms 4 end up extending directly below the pallet 101, more specifically below the bottom slats 103a, 103b thereof. The compact position could alternatively also be adopted again if the base unit 2 is at a standstill and the lifting arms 21 are pulled back by suitable energization of the electric motors 44. For such a method, it would be preferable for the supporting feet 32 to be replaced by rolling bodies, such as running wheels or running rollers. The electric motors belonging to the running wheels 19 could then be energized such that the running wheels 19 are actually braked and/or the running wheels 19 of pairs of wheels 18 situated next to each other could be positioned in a V shape such that resistance is offered against the tendency of the running wheels 19 to roll. The motor 56 and the cylinder 29 are then energized such that the lifting mechanisms 31 adopt the first extreme position again and the pallet 101 comes to rest on the support surfaces 8 of the support arms 4. The pallet truck 1 can then transport the pallet 101 with its load 102 to another position by suitable energization of the electric motors belonging to the running wheels 19.

For the unloading of the pallet 1, the steps described above are carried out in the reverse order: The lifting arms 21 move to the transferring position by energization of the electric motor 56 and the cylinder 29, the pallet 101 coming free from the support arms 4. The base unit 2 then moves forwards such that the pallet truck 1 adopts the extended position and the support arms 4, in top view, come to lie completely outside the pallet 101. The lifting arms 21 then move from the transferring position to the lower receiving position again by suitable energization of the electric motor 56 and the cylinder 29, the lifting mechanisms 31 coming completely free from the floor 6 and the pallet 101 coming to rest on this floor 6. The lifting arms 21 then retract again, with the base unit 2 at a standstill, such that the pallet truck 1 adopts the compact position again.

## Claims

1. Pallet truck, preferably of the self-propelled type, for transporting a load carrier, comprising
- a base unit which is provided with a number of running wheels which rest on an underlying surface, the base unit comprising two elongate support arms which extend parallel to and next to each other and each have an elongate first support surface for supporting a load carrier thereon, wherein at least one running wheel of the number of running wheels is provided below each support arm,
- a lifting unit which is provided with
- a lifting base body,
- two elongate lifting arms which extend parallel to the length directions of the support arms and each have an elongate second support surface for supporting a load carrier thereon,
- a vertical displacement device for displacing the two lifting arms up and down in a vertical direction with respect to the lifting base body between a receiving position and a transferring position, wherein, in the transferring position, the second support surfaces are higher than the first support surfaces and higher than the level of the second support surfaces in the receiving position,
the pallet truck further comprising
- a horizontal displacement device for displacing the lifting unit back and forth in a horizontal direction with respect to the base unit between a compact position and an extended position,
**characterized in that** the vertical displacement device has, for each of the two lifting arms, at least one lifting mechanism, which lifting mechanisms are each provided below the second support surface of an associated lifting arm in order to displace or at least contribute to the displacement of the two lifting arms between the receiving position and the transferring position.

2. Pallet truck according to Claim 1, wherein each lifting mechanism has a supporting body and each lifting mechanism is configured to be able to displace the supporting body and the associated lifting arm in the vertical direction with respect to each other between a first extreme position and a second extreme position, wherein the distance between the supporting body and the second support surface of the associated lifting arm in the first extreme position is smaller than in the second extreme position, and wherein the difference between these distances is greater than the distance between the first support surfaces and the underlying surface, preferably at least 1 cm greater.

3. Pallet truck according to Claim 1 or 2, wherein at least one lifting mechanism belonging to each arm is provided close to a free end of the associated lifting arm.

4. Pallet truck according to Claim 2 or 3, wherein each lifting mechanism comprises two linkage arms which are hingeably connected to each other, preferably at the lower end of at least one linkage arm, and wherein the associated supporting body is provided at the lower end of at least one linkage arm, and wherein the lifting mechanism is configured to move the upper ends of the linkage arms away from and towards each other, wherein, preferably, each lifting mechanism comprises a spindle having two opposite external threaded parts which are in line with each other and are rigidly connected to each other and the two linkage arms each have a screw body having an internal screw thread, wherein the directions of the two screw threads are opposite to each other, and wherein one of the two screw bodies engages with one of the two threaded parts and the other of the two screw bodies engages with the other of the two threaded parts.

5. Pallet truck according to one of the preceding claims, wherein the horizontal displacement device comprises a horizontal guide device for guiding the back-and-forth displacement of the lifting unit with respect to the base unit between the compact position and the extended position, wherein, preferably, the horizontal guide device comprises, for each of the support arms, at least one guide which extends in the length direction of the support arms and preferably each form part of the support arms.

6. Pallet truck according to one of the preceding claims, wherein the two lifting arms extend between the two support arms, wherein, preferably, mutually averted sides of the lifting arms are situated at a distance of between 42 cm and 58 cm, preferably of between 47 cm and 53 cm, from each other and/or wherein mutually facing sides of the lifting arms are situated at a distance of between 10 cm and 40 cm, preferably of between 30 cm and 35 cm, from each other.

7. Pallet truck according to one of the preceding claims, wherein the mutually averted sides of the outer one of the support arms or of the lifting arms are situated at a distance of between 70 cm and 110 cm, preferably of between 75 and 85 cm or of between 95 cm and 105 cm, from each other.

8. Pallet truck according to one of the preceding claims, wherein the first support surface of each support arm and/or the second support surface of each lifting arm has a length of between 80 cm and 140 cm, preferably of between 110 cm and 130 cm, and/or the lengths of the first support surfaces and the second support surfaces differ by at most 5 cm from each other, and/or wherein the height of each lifting arm is smaller than the height of each support arm, preferably wherein the height of each lifting arm is smaller than 8 cm.

9. Pallet truck according to Claim 8, wherein, in the compact position, free ends of the lifting arms and of the support arms protrude by at most 5 cm with respect to each other.

10. Pallet truck according to one of the preceding claims, wherein, in the receiving position, the second support surfaces are lower than the first support surfaces.

11. Pallet truck according to one of the preceding claims, wherein the lifting unit comprises a lifting body via which the two lifting arms are connected to each other and which is connected to the lifting base body so as to be displaceable, preferably slidable, up and down.

12. Pallet truck according to one of the preceding claims, wherein the vertical displacement device is configured to displace the two lifting arms up and down in the vertical direction with respect to the lifting base body between the receiving position and a lifting position, wherein the second support surfaces are higher, preferably at least 20 cm higher, in the lifting position than in the transferring position.

13. Pallet truck according to Claim 11 and preferably according to Claim 12, wherein the vertical displacement device comprises a further lifting mechanism which has a vertical stroke that is greater than the respective vertical strokes of the at least two lifting mechanisms which belong to the two lifting arms, and which further lifting mechanism is active between the lifting body and the lifting base body.

14. Method for using a pallet truck according to one of the preceding claims, comprising the steps of
A displacing the pallet truck to a position opposite a load carrier resting on an underlying surface, wherein, in this position, the lifting unit is in the compact position and the lifting arms are in the receiving position and wherein free ends of the lifting arms are facing the load carrier,
B displacing, after step A, the lifting unit from the compact position to or at least in the direction of the extended position by means of the horizontal displacement device, as a result of which the two lifting arms are positioned, at least with a part of their lengths, preferably with at least 80% of their lengths, below the load surface of the load carrier,
C displacing, after step B, the lifting arms upwards from the receiving position by means of the vertical displacement device at least due to the activity of the lifting mechanisms, as a result of which the load carrier comes to rest on the second support surfaces of the lifting arms and as a result of which the two lifting arms lift the load carrier from the underlying surface to a level at which the lower side of the load carrier extends above the level of the two first support surfaces of the support arms,
D displacing, after step C, the lifting unit and the base unit in the horizontal direction towards each other by means of the horizontal displacement device, wherein, preferably, the lifting unit is at a standstill and the base unit is displaced towards the lifting unit, such that the pallet truck adopts the compact position again and the load carrier extends directly above the two first support surfaces of the support arms,
E displacing, after step D, the lifting unit downwards by means of the vertical displacement device at least due to the activity of the lifting mechanisms, as a result of which the load carrier comes to rest on the two first support surfaces,
F displacing, after step E, the load carrier to a destination by means of the pallet truck.

15. Method according to Claim 14, wherein the load carrier has, on the side facing the pallet truck during step A, a bottom part which rests on the underlying surface and the two lifting bodies move above the bottom part during step B.
